# EUROPÄISCHE PATENTSCHRIFT

(11) **EP 3 317 569 B1**
(45) Veröffentlichungstag und Bekanntmachung des Hinweises auf die Patenterteilung: **09.01.2019**
(21) Anmeldenummer: 16740946.5
(22) Anmeldetag: 28.06.2016
(51) Int. Cl.: F02D 41/20, F16K 31/128, F02D 19/06, F02D 41/00, F02D 41/38, F16K 31/126, F16K 31/165

(54) **VENTILEINRICHTUNG**
VALVE DEVICE
ENSEMBLE SOUPAPE

(30) Priorität: 03.07.2015 AT 4352015
(43) Veröffentlichungstag der Anmeldung: 09.05.2018
(73) Patentinhaber: Sonderhoff Engineering GmbH, 6850 Dornbirn (AT)
(72) Erfinder: SCHWABL, Christian, 6900 Bregenz (AT); BALDAUF, Günther, 6914 Hohenweiler (AT); METZLER, Mario, 6890 Lustenau (AT)
(74) Vertreter: Torggler & Hofinger Patentanwälte
(86) Internationale Anmeldenummer: PCT/AT2016/050235
(87) Internationale Veröffentlichungsnummer: WO 2017/004642

(56) Entgegenhaltungen:
- EP-A1- 1 123 155
- EP-A1- 2 848 387
- EP-A2- 0 300 081
- EP-A2- 2 023 025
- EP-B1- 1 115 972
- EP-B1- 1 115 972
- WO-A1-2012/154924
- WO-A1-2012/154924
- DE-A1- 4 306 072
- DE-A1- 4 306 072
- US-A- 3 241 569
- US-A- 3 241 569
- US-A- 4 237 931
- US-A- 4 237 931
- US-A- 4 688 944
- US-A- 4 688 944
- US-A- 5 758 862
- US-A- 5 758 862
- US-B1- 6 354 319
- US-B1- 6 354 319

## Beschreibung

Die vorliegende Erfindung betrifft eine Ventileinrichtung mit den Merkmalen des Oberbegriffs des Anspruchs 1.

Ventileinrichtungen sind in den Druckschriften US 3,241,569 A, DE 43 06 072 A1, US 5,758,862 A, US 6,354,319 B1, US 4,688,944 A, US 4,237,931 A und WO 2012/154924 A1 offenbart.

Eine Ventileinrichtung nach dem Oberbegriff des Anspruchs 1 geht aus der EP 1 123 155 B1 hervor. Bei dieser Ventileinrichtung wird die Steuermembran pneumatisch beaufschlagt, was den einsetzbaren Druckbereich auf sehr niedrige Drücke beschränkt oder große Übersetzungsflächen erfordert.

Eine weitere Ventileinrichtung geht aus der DE 195 42 797 B4 hervor. Die in dieser Schrift gezeigte Einrichtung baut sehr groß. Die Steuerung des Kraftspeichers erfolgt durch manuelle Verstellung.

Aufgabe der Erfindung ist die Bereitstellung einer Ventileinrichtung, bei welcher die oben beschriebenen Probleme zumindest teilweise vermieden werden.

Diese Aufgabe wird durch eine Ventileinrichtung mit den Merkmalen des Anspruchs 1 gelöst. Vorteilhafte Ausführungsformen der Erfindung sind in den abhängigen Ansprüchen definiert.

Das Vorsehen eines zumindest teilweise im Ventilgehäuse angeordneten Steuerraums für ein im Wesentlichen inkompressibles Fluid (z. B. eine Flüssigkeit oder ein hochverdichtetes Gas) gestattet es, den einsetzbaren Druckbereich auf weit höhere Drücke zu erweitern als im Stand der Technik, ohne dass große Übersetzungsflächen notwendig wären. Mit der Erfindung eröffnen sich Druckbereiche bis zu 100 bar anstelle von ca. 25 bar wie beim Stand der Technik. Da das im Wesentlichen inkompressible Fluid als Übertragungsflüssigkeit für den durch die Druckerzeugungsvorrichtung erzeugten Druck fungiert, kann die Druckerzeugungsvorrichtung in Bezug auf das Verschlusselement beliebig angeordnet werden, was günstige Bauformen erlaubt.

Das Vorsehen einer steuerbaren Entlastungsvorrichtung, durch welche die vom Kraftspeicher auf das Druckübertragungselement ausgeübte Kraft reduzierbar ist, ermöglicht die Einstellung der Kraft durch eine Steuereinrichtung, sodass keine manuelle Verstellung erforderlich ist.

Es sei angemerkt, dass im Folgenden die Begriffe Kraft und Druck austauschbar verwendet werden, da eine Umrechnung zwischen Kraft und Druck bei bekannter Fläche einfach durchführbar ist.

Ausführungsformen der Erfindung werden anhand der Figuren diskutiert. Es zeigen:
- Fig. 1: eine perspektivische Darstellung eines Ausführungsbeispiels einer erfindungsgemäßen Ventileinrichtung,
- Fig. 2a: eine Schnittdarstellung durch die Ventileinrichtung der Fig. 1,
- Fig. 2b: eine Schnittdarstellung gemäß Schnittlinie A-A der Fig. 2a,
- Fig. 3: einen geänderten Zustand der Ventileinrichtung nach Fig. 2a und
- Fig. 4: eine Schnittdarstellung durch ein weiteres Ausführungsbeispiel einer erfindungsgemäßen Ventileinrichtung.

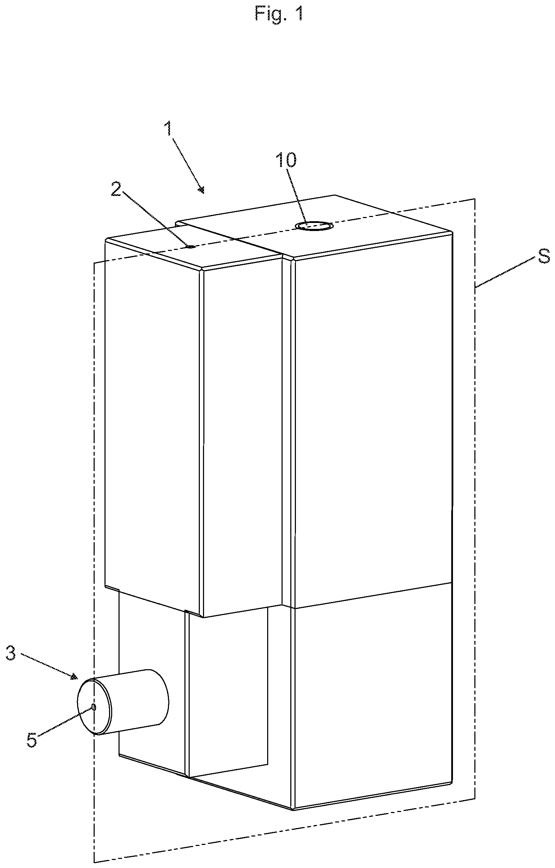

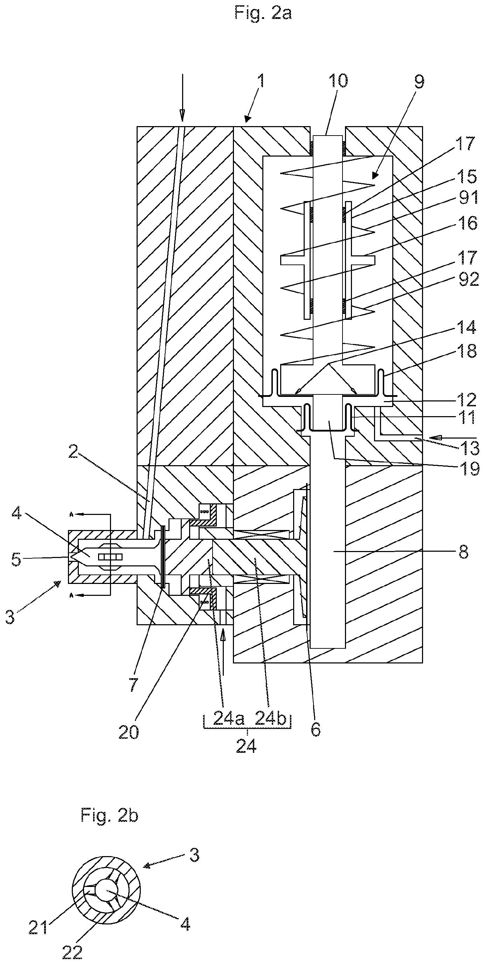

Fig. 1 zeigt eine perspektivische Darstellung einer vorgeschlagenen Ventileinrichtung, wobei die Schnittebene S der Schnittdarstellung nach Fig. 2a eingezeichnet ist.

Fig. 2a zeigt das Ventilgehäuse 1 mit einem Flüssigkeitszulauf 2 und einem Dosierventil 3, das eine von einem Verschlusselement 4 verschließbare Ausbringöffnung 5 aufweist. Über den Flüssigkeitszulauf 2 kann eine Flüssigkeit - beispielsweise eine flüssige Kunststoffkomponente eines ein- oder mehrkomponentigen Kunststoffgemisches - in das Dosierventil 3 eingebracht werden.

Es ist eine Drucksteuereinrichtung vorgesehen, welche auf die Flüssigkeit im Flüssigkeitszulauf 2 bzw. im Dosierventil 3 einwirkt. Die Drucksteuereinrichtung umfasst eine auf das Verschlusselement 4 einwirkende Steuermembran 6. Es ist eine Absperrmembran 7 vorgesehen, welche die Drucksteuereinrichtung vom Flüssigkeitszulauf 2 bzw. vom Dosierventil 3 trennt. Die Absperrmembran 7 ist an einem der Ausbringöffnung 5 abgewandten Ende des Verschlusselements 4 angeordnet. Die Drucksteuereinrichtung weist einen in diesem Ausführungsbeispiel vollständig im Ventilgehäuse 1 angeordneten fluiddichten Steuerraum 8 für ein im Wesentlichen inkompressibles Fluid auf. Wie dargestellt ist die Absperrmembran 7 in Form mehrerer Sandwich-artig angeordneter Einzelmembranen ausgebildet. Dies ist gegenüber einer einlagigen, dickeren Ausbildung einer Membran zu bevorzugen. Dies kann in Bezug auf alle Membranen erfolgen.

Es ist eine Druckerzeugungsvorrichtung vorgesehen, durch welche die Steuermembran 6 über ein im Steuerraum 8 angeordnetes inkompressibles Fluid mit Druck beaufschlagbar ist.

Die Drucksteuereinrichtung umfasst ein zwischen der Steuermembran 6 und dem Verschlusselement 4 angeordnetes Übertragungselement 24 zur Übertragung des auf die Steuermembran 6 einwirkenden Druckes auf das Verschlusselement 4. Das Übertragungselement 24 ist in diesem Beispiel zwischen der Steuermembran 6 und der am Verschlusselement 4 angeordneten Absperrmembran 7 angeordnet. Das hier kolbenförmige Übertragungselement 24 besteht aus einem ersten Elementteil 24a, der mit dem Verschlusselement 4 verbunden ist und aus einem zweiten Elementteil 24b, der mit der Steuermembran 6 verbunden ist. Die einander zugewandten Enden von erstem Elementteil 24a und zweitem Elementteil 24b liegen aneinander an (z.B. momentenfrei über eine dazwischen angeordnete kugelige Fläche, nicht dargestellt), sodass bei einer Druckeinwirkung auf die Steuermembran 6 dieser Druck über den zweiten Elementteil 24b und den ersten Elementteil 24a auf das Verschlusselement 4 übertragen werden kann.

Die Druckerzeugungsvorrichtung weist ein durch einen Kraftspeicher 9 (hier in Form einer Schraubenfeder ausgebildet, auch andere Kraftspeicher wären einsetzbar) beaufschlagbares Druckübertragungselement 10 auf, welches in diesem Ausführungsbeispiel als Stößel bzw. Kolben ausgebildet ist. Das Druckübertragungselement 10 beaufschlagt den Steuerraum 8, welcher hier mittels einer ersten Rollmembran 11 abgeschlossen ist.

Es ist eine steuerbare Entlastungsvorrichtung vorgesehen, durch welche die vom Kraftspeicher 9 auf das Druckübertragungselement 10 ausgeübte Kraft reduzierbar ist. Die steuerbare Entlastungvorrichtung ist hier in Form eines mit einem unter Druck stehenden Fluid füllbaren Entlastungsraums 12 ausgebildet. Im vorliegenden Ausführungsbeispiel handelt es sich beim Fluid um Luft. Das Fluid kann über eine Fluidöffnung 13 in den Entlastungsraum 12 eingebracht und, zum Beispiel über einen Proportionaldruckregler, unter einem einstellbaren Druck gehalten werden. Im gezeigten Ausführungsbeispiel wirkt das Fluid auf eine Schulter 14 des Druckübertragungselements 10 ein und reduziert so die vom Kraftspeicher 9 auf das Druckübertragungselement 10 ausgeübte Kraft um ein einstellbares Maß. Die vom Kraftspeicher 9 auf das Druckübertragungselement 10 ausgeübte Kraft ist also eine Maximalkraft, welche je nach Einstellung des Druckes des Fluids auf das gewünschte Maß reduziert werden kann.

Der Fluiddruck im Steuerraum 8 entsteht aus der durch den Kraftspeicher 9 auf die erste Rollmembran 11 ausgeübten Kraft, abzüglich der dem Kraftspeicher 9 entgegenwirkenden Kraft aus dem Entlastungsraum 12. Auf die Absperrmembran 7 wirkt eine durch die ausströmende Flüssigkeit entstehende Kraft. Die Dimensionierung von Absperrmembran 7 und Steuermembran 6 ist so gewählt, dass der niedrigere Druck des Fluids im Steuerraum 8 (z.B. 30 bar) im Gleichgewicht steht mit dem größeren Druck, der durch die ausströmende Flüssigkeit erzeugt wird (z.B. 90 bar). Dies entspricht einem Übersetzungsverhältnis von 1 : 3. Kommt es zu Druckschwankungen, können sich die Absperrmembran 7 und die Steuermembran 6 so (in Fig. 2a nach links oder rechts) bewegen, dass bei einem vergrößerten oder verkleinerten Spalt zwischen Verschlusselement 4 und Ausbringöffnung 5 ein neues Gleichgewicht entsteht.

Das vorliegende Ausführungsbeispiel ist ausfallssicher in Bezug auf einen Ausfall des durch das Fluid aufgebrachten Druckes insofern, als es bei einem Ausfall zu einem sicheren Schließen der Ausbringöffnung 5 durch das Verschlusselement 4 kommt: fehlt der Druck des Fluids im Entlastungsraum 12, so wird die vom Kraftspeicher 9 auf das Druckübertragungselement 10 ausgeübte Kraft nicht reduziert. Diese Kraft ist so bemessen, dass sie ausreicht, um die Ausbringöffnung 5 durch das Verschlusselement 4 zu schließen.

Im gezeigten Ausführungsbeispiel ist der Kraftspeicher 9 zweiteilig ausgebildet: es sind ein erster Kraftspeicher 91 und ein zweiter Kraftspeicher 92 vorgesehen, die hintereinander geschaltet sind und die sich jeweils an einem Flansch 16 abstützen, wobei dieser Flansch 16 an einem verschiebbar am Druckübertragungselement 10 angeordneten Schlitten 15 angeordnet ist. Der Schlitten 15 steht über Gleitlager 17 mit dem Druckübertragungselement 10 in Kontakt.

Das Druckübertragungselement 10 weist einen Kopfteil 19 auf, wobei eine zweite Rollmembran 18 zwischen dem Kopfteil 19 und der Schulter 14 eingeklemmt ist.

Anders als dargestellt muss das den Steuerraum 8 gegen die Druckerzeugungsvorrichtung bzw. gegen den Kopfteil 19 des Druckübertragungselements 10 der Druckerzeugungsvorrichtung abdichtende Element bzw. das den Entlastungsraum 12 gegen die Schulter 14 des Druckübertragungselements 10 abdichtende Element nicht als Rollmembran ausgebildet sein. Alternativ können Flachmembranen oder Kolbendichtungen zum Einsatz kommen.

Zum vollständigen Verschließen der Ausbringöffnung 5 durch das Verschlusselement 4 ist ein, vorzugsweise pneumatisch beaufschlagbares, Stellelement 20 vorgesehen. Kommt es wie oben beschrieben zu einem Ausfall des Pneumatiksystems, wäre eine sicherer Verschluss der Ausbringöffnung 5 durch das Stellelement 20 nicht gewährleistet. Es greift jedoch die oben beschriebene Ausfallsicherung.

Fig. 2b zeigt eine Schnittdarstellung durch das Dosierventil 3 gemäß Schnittlinie A-A der Fig. 2a. Das Verschlusselement 4 weist in diesem Ausführungsbeispiel an einem Innenmantel 22 des Dosierventils 3 anliegende Vorsprünge 21 auf, über welche es gegen ein radiales Ausweichen in Bezug auf die in diesem Fall düsenförmige Ausbringöffnung 5 gesichert ist.

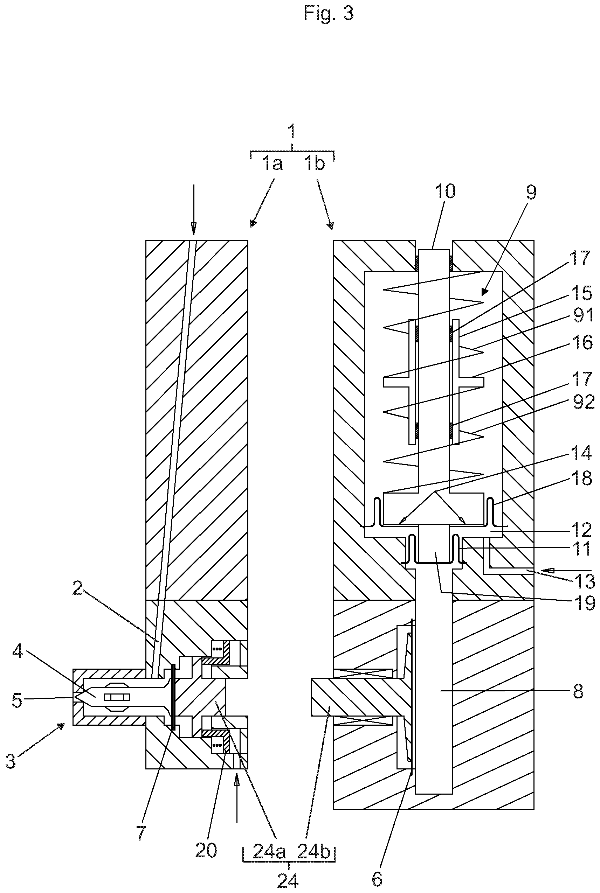

In Fig. 3 ist ersichtlich, dass das Ventilgehäuse 1 in diesem Beispiel zwei Ventilgehäuseteile umfasst, nämlich einen ersten Ventilgehäuseteil 1a und einen zweiten Ventilgehäuseteil 1b, der mit dem ersten Ventilgehäuseteil 1a lösbar verbindbar ist. In der gezeigten Darstellung sind erster Ventilgehäuseteil 1a und zweiter Ventilgehäuseteil 1b voneinander gelöst dargestellt. Das Dosierventil 3, die Ausbringöffnung 5, das Verschlusselement 4, der Flüssigkeitszulauf 2 und die Absperrmembran 7 sind im ersten Ventilgehäuseteil 1a angeordnet und der Steuerraum 8, die Steuermembran 6, der Entlastungsraum 12, das Druckübertragungselement 10 und der Kraftspeicher 9 sind im zweiten Ventilgehäuseteil 1b angeordnet.

Das erste Elementteil 24a des zweiteiligen Übertragungselements 24 ist in einer Öffnung im ersten Ventilgehäuseteil 1a angeordnet. Das zweite Elementteil 24b ist im zweiten Ventilgehäuseteil 1b angeordnet. Ein freies Ende des zweiten Elementteils 24b ragt über die Oberfläche des zweiten Ventilgehäuseteils 1b heraus. Das Verbinden des zweiten Ventilgehäuseteils 1b mit dem ersten Ventilgehäuseteil 1a kann erleichtert werden, indem das freie Ende des zweiten Elementteils 24b in die Öffnung im ersten Ventilgehäuseteil 1a eingeführt wird.

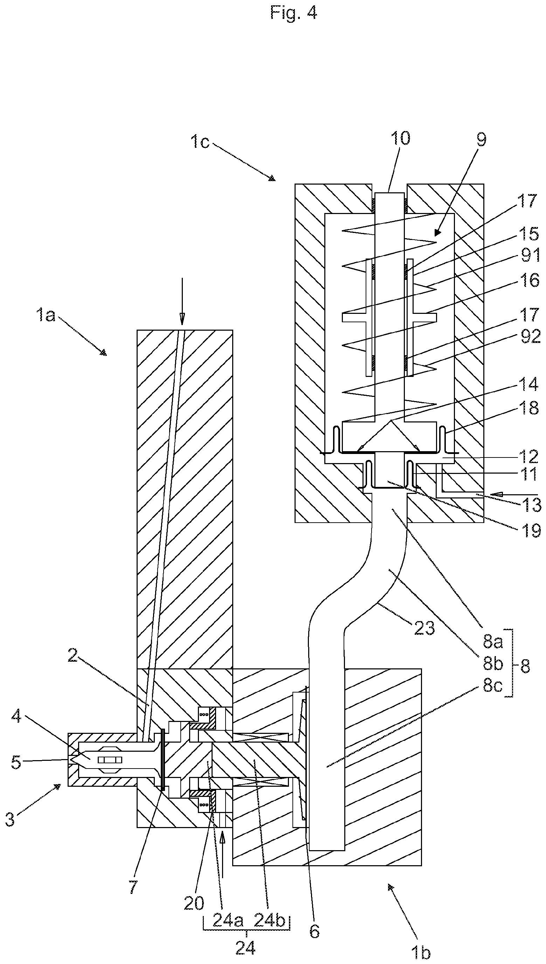

Fig. 4 zeigt in einer Schnittdarstellung gemäß Fig. 2a ein weiteres Ausführungsbeispiel einer vorgeschlagenen Ventileinrichtung. Die Ventileinrichtung umfasst in diesem Beispiel ein dreiteilig ausgebildetes Ventilgehäuse 1, umfassend einen ersten Ventilgehäuseteil 1a, einen zweiten Ventilgehäuseteil 1b und einen dritten Ventilgehäuseteil 1c. Im ersten Ventilgehäuseteil 1a sind das Dosierventil 3, die Ausbringöffnung 5, das Verschlusselement 4, der Flüssigkeitszulauf 2, die Absperrmembran 7 und das erste Elementteil 24a des zweiteiligen Übertragungselements 24 angeordnet. Mit dem ersten Ventilgehäuseteil 1a ist der zweite Ventilgehäuseteil 1b verbunden, in dem das zweite Elementteil 24b, die Steuermembran 6 und ein dritter Steuerraumbereich 8c des Steuerraums 8 angeordnet sind. Im dritten Ventilgehäuseteil 1c sind die Druckerzeugungsvorrichtung (Druckübertragungselement 10, Kraftspeicher 9), die Entlastungsvorrichtung (Entlastungsraum 12) und ein erster Steuerraumbereich 8a angeordnet. Die ebenfalls im dritten Ventilgehäuseteil 1c angeordnete erste Rollmembran 11 begrenzt den ersten Steuerraumbereich 8a gegenüber der Druckerzeugungsvorrichtung. Der erste Steuerraumbereich 8a ist über eine Leitung 23 - welche einen zweiten Steuerraumbereich 8b bildet - mit dem dritten Steuerraumbereich 8c im zweiten Ventilgehäuseteil 1b verbunden. In diesem Beispiel bilden der erste Steuerraumbereich 8a, der zweite Steuerraumbereich 8b und der dritte Steuerraumbereich 8c gemeinsam den Steuerraum 8 der Ventileinrichtung.

### Bezugszeichenliste:

- 1: Ventilgehäuse
- 1a: erster Ventilgehäuseteil
- 1b: zweiter Ventilgehäuseteil
- 1c: dritter Ventilgehäuseteil
- 2: Flüssigkeitszulauf
- 3: Dosierventil
- 4: Verschlusselement
- 5: Ausbringöffnung
- 6: Steuermembran
- 7: Absperrmembran
- 8: Steuerraum
- 8a: erster Steuerraumbereich
- 8b: zweiter Steuerraumbereich
- 8c: dritter Steuerraumbereich
- 9: Kraftspeicher
- 91: erster Kraftspeicher
- 92: zweiter Kraftspeicher
- 10: Druckübertragungselement
- 11: erste Rollmembran
- 12: Entlastungsraum
- 13: Fluidöffnung
- 14: Schulter
- 15: Schlitten
- 16: Flansch
- 17: Gleitlager
- 18: zweite Rollmembran
- 19: Kopfteil des Drückübertragungselements 10
- 20: Stellelement
- 21: Vorsprünge
- 22: Innenmantel
- 23: Leitung
- 24: Übertragungselement
- 24a: erster Elementteil
- 24b: zweiter Elementteil

## Patentansprüche

1. Ventileinrichtung für flüssige Kunststoffkomponenten von ein- oder mehrkomponentigen Kunststoffgemischen, mit einem Ventilgehäuse (1) mit einem Flüssigkeitszulauf (2) und einem Dosierventil (3), das eine von einem Verschlusselement (4) verschließbare Ausbringöffnung (5) aufweist, mit einer auf die Flüssigkeit im Flüssigkeitszulauf (2) einwirkenden Drucksteuereinrichtung, welche eine auf das Verschlusselement (4) einwirkende Steuermembran (6) umfasst und mit einer Absperrmembran (7), welche die Drucksteuereinrichtung vom Flüssigkeitszulauf (2) trennt, **dadurch gekennzeichnet, dass** die Drucksteuereinrichtung einen zumindest teilweise im Ventilgehäuse (1) angeordneten fluiddichten Steuerraum (8) für ein im Wesentlichen inkompressibles Fluid umfasst, wobei eine Druckerzeugungsvorrichtung vorgesehen ist, durch welche die Steuermembran (6) über ein im Steuerraum (8) angeordnetes inkompressibles Fluid mit Druck beaufschlagbar ist.

2. Ventileinrichtung nach Anspruch 1, wobei die Absperrmembran (7) am Verschlusselement (4), vorzugsweise an einem der Ausbringöffnung (5) abgewandten Ende des Verschlusselements (4), angeordnet ist.

3. Ventileinrichtung nach Anspruch 1 oder 2, wobei die Drucksteuereinrichtung ein zwischen der Steuermembran (6) und dem Verschlusselement (4) angeordnetes Übertragungselement (24) zur Übertragung eines auf die Steuermembran (6) einwirkenden Druckes auf das Verschlusselement (4) umfasst.

4. Ventileinrichtung nach Anspruch 2 und 3, wobei das Übertragungselement (24) zwischen der Steuermembran (6) und der Absperrmembran (7) angeordnet ist.

5. Ventileinrichtung nach wenigstens einem der vorangehenden Ansprüche, wobei der Steuerraum (8) gegenüber der Druckerzeugungsvorrichtung durch eine erste Dichtung, vorzugsweise eine erste Rollmembran (11), abgeschlossen ist.

6. Ventileinrichtung nach wenigstens einem der vorangehenden Ansprüche, wobei die Druckerzeugungsvorrichtung einen Kraftspeicher (9) und ein durch den Kraftspeicher (9) beaufschlagbares Druckübertragungselement (10) aufweist, wobei vorzugsweise der Kraftspeicher (9) als Schraubenfeder ausgebildet ist.

7. Ventileinrichtung nach Anspruch 6, wobei der Kraftspeicher (9) wenigstens zweiteilig ausgebildet ist, wobei vorzugsweise der Kraftspeicher (9) einen ersten Kraftspeicher (91) und einen zweiten Kraftspeicher (92) umfasst, die hintereinander geschaltet sind, wobei sich vorzugsweise der erste Kraftspeicher (91) und der zweite Kraftspeicher (92) jeweils an einem Flansch (16) eines verschiebbar am Druckübertragungselement (10) angeordneten Schlittens (15) abstützen.

8. Ventileinrichtung nach wenigstens einem der vorangehenden Ansprüche, wobei das Ventilgehäuse (1) wenigstens zweiteilig ausgebildet ist.

9. Ventileinrichtung nach Anspruch 8, wobei das Ventilgehäuse (1) einen ersten Ventilgehäuseteil (1a) und einen zweiten Ventilgehäuseteil (1b) umfasst, wobei der erste Ventilgehäuseteil (1a) mit dem zweiten Ventilgehäuseteil (1b) lösbar verbindbar ist, wobei vorzugsweise im ersten Ventilgehäuseteil (1a) zumindest das Dosierventil (3), die Ausbringöffnung (5), das Verschlusselement (4), der Flüssigkeitszulauf (2) und die Absperrmembran (7) angeordnet sind.

10. Ventileinrichtung nach Anspruch 9, wobei im zweiten Ventilgehäuseteil (1b) zumindest die Steuermembran (6) und der Steuerraum (8), sowie vorzugsweise auch die Druckerzeugungsvorrichtung, angeordnet sind.

11. Ventileinrichtung nach Anspruch 9, wobei das Ventilgehäuse (1) einen dritten Ventilgehäuseteil (1c) umfasst, in dem die Druckerzeugungsvorrichtung und ein erster Steuerraumbereich (8a) angeordnet sind, wobei im zweiten Ventilgehäuseteil (1b) die Steuermembran (6) und ein dritter Steuerraumbereich (8c) angeordnet sind, der über eine einen zweiten Steuerraumbereich (8b) bildende Leitung (23) mit dem ersten Steuerraumbereich (8a) verbunden ist, wobei der erste Steuerraumbereich (8a), der zweite Steuerraumbereich (8b) und der dritte Steuerraumbereich (8c) gemeinsam den Steuerraum (8) bilden.

12. Ventileinrichtung nach einem der Ansprüche 1 bis 11, wobei die Druckerzeugungsvorrichtung ein durch einen Kraftspeicher (9) beaufschlagbares Druckübertragungselement (10) aufweist, wobei eine steuerbare Entlastungsvorrichtung vorgesehen ist, durch welche die vom Kraftspeicher (9) auf das Druckübertragungselement (10) ausgeübte Kraft reduzierbar ist.

13. Ventileinrichtung nach Anspruch 12, wobei die Entlastungsvorrichtung einen Entlastungsraum (12) umfasst, wobei vorzugsweise in den Entlastungsraum 12 eine Fluidöffnung (13) mündet, über die ein unter Druck stehendes Fluid - vorzugsweise Luft - in den Entlastungsraum (12) einbringbar ist.

14. Ventileinrichtung nach Anspruch 13, wobei das Druckübertragungselement (10) eine Schulter (14) aufweist, die den Entlastungsraum (12) begrenzt.

15. Ventileinrichtung nach Anspruch 13 oder 14, wobei der Entlastungsraum (12) gegenüber dem Druckübertragungselement (10) zumindest teilweise durch eine zweite Dichtung, vorzugsweise eine zweite Rollmembran (18), abgeschlossen ist.

## Claims

1. A valve device for liquid plastic components of single-component or multicomponent plastic mixtures, comprising a valve housing (1) having a liquid feed (2) and a metering valve (3) having a discharge opening (5) closeable by a closure element (4), a pressure control device acting on the liquid in the liquid feed (2) and including a control diaphragm (6) acting on the closure element (4), and a shut-off diaphragm (7) which separates the pressure control device from the liquid feed (2), **characterised in that** the pressure control device includes a fluid-tight control chamber (8) for a substantially incompressible fluid, that is arranged at least partially in the valve housing (1), wherein there is provided a pressure generating device by which the control diaphragm (6) can be acted upon with pressure by way of an incompressible fluid arranged in the control chamber (8).

2. A valve device as set forth in claim 1 wherein the shut-off diaphragm (7) is arranged at the closure element (4), preferably at an end of the closure element (4), that is remote from the discharge opening (5).

3. A valve device as set forth in claim 1 or 2 wherein the pressure control device includes a transmission element (24) arranged between the control diaphragm (6) and the closure element (4) for transmission of a pressure acting on the control diaphragm (6) to the closure element (4).

4. A valve device as set forth in claim 2 and 3 wherein the transmission element (24) is arranged between the control diaphragm (6) and the shut-off diaphragm (7).

5. A valve device as set forth in at least one of the preceding claims wherein the control chamber (8) is closed off with respect to the pressure generating device by a first seal, preferably a first rolling diaphragm (11).

6. A valve device as set forth in at least one of the preceding claims wherein the pressure generating device has a force storage means (9) and a pressure transmission element (10) which can be acted upon by the force storage means (9), wherein preferably the force storage means (9) is in the form of a coil spring.

7. A valve device as set forth in claim 6 wherein the force storage means (9) is of an at least two-part configuration, wherein preferably the force storage means (9) includes a first force storage means (91) and a second force storage means (92) which are connected in succession, wherein preferably the first force storage means (91) and the second force storage means (92) are respectively supported at a flange (16) of a slider (15) arranged displaceably on the pressure transmission element (10).

8. A valve device as set forth in at least one of the preceding claims wherein the valve housing (1) is of an at least two-part configuration.

9. A valve device as set forth in claim 8 wherein the valve housing (1) includes a first valve housing portion (1a) and a second valve housing portion (1b), wherein the first valve housing portion (1a) can be releasably connected to the second valve housing portion (1b), wherein preferably arranged in the first valve housing portion (1a) are at least the metering valve (3), the discharge opening (5), the closure element (4), the liquid feed (2) and the shut-off diaphragm (7).

10. A valve device as set forth in claim 9 wherein arranged in the second valve housing portion (1b) are at least the control diaphragm (6) and the control chamber (8) and preferably also the pressure generating device.

11. A valve device as set forth in claim 9 wherein the valve housing (1) includes a third valve housing portion (1c) in which the pressure generating device and a first control chamber region (8a) are arranged, wherein arranged in the second valve housing portion (1b) are the control diaphragm (6) and a third control chamber region (8c) which is connected to the first control chamber region (8a) by way of a conduit (23) forming a second control chamber region (8b), wherein the first control chamber region (8a), the second control chamber region (8b) and the third control chamber region (8c) jointly form the control chamber (8).

12. A valve device as set forth in one of claims 1 through 11, wherein the pressure generating device has a pressure transmission element (10) which can be acted upon by a force storage means (9), wherein there is provided a controllable relief device by which the force exerted on the pressure transmission element (10) by the force storage means (9) can be reduced.

13. A valve device as set forth in claim 12 wherein the relief device includes a relief chamber (12), wherein preferably a fluid opening (13) opens into the relief chamber (12), by way of which fluid opening a fluid under pressure - preferably air - can be introduced into the relief chamber (12).

14. A valve device as set forth in claim 13 wherein the pressure transmission element (10) has a shoulder (14) which delimits the relief chamber (12).

15. A valve device as set forth in claim 13 or 14 wherein the relief chamber (12) is at least partially closed off with respect to the pressure transmission element (10) by a second seal, preferably a second rolling diaphragm (18).

## Revendications

1. Dispositif formant soupape pour des composants synthétiques fluides de mélanges synthétiques à un composant ou à composants multiples, avec un carter de soupape (1) avec une arrivée de liquide (2) et une soupape de dosage (3), qui présente un orifice de distribution (5) pouvant être fermé par un élément de fermeture (4), avec un système de commande de pression agissant sur le liquide dans l'arrivée de liquide (2), lequel comprend une membrane de commande (6) agissant sur l'élément de fermeture (4), et avec une membrane de fermeture (7), laquelle sépare le système de commande de pression de l'arrivée de liquide (2), **caractérisé en ce que** le système de commande de pression comprend un espace de commande (8) étanche aux fluides disposé au moins en partie dans le carter de soupape (1) pour un fluide sensiblement incompressible, dans lequel est prévu un dispositif de production de pression, par lequel la membrane de commande (6) peut être soumise à l'action d'une pression par l'intermédiaire d'un fluide incompressible disposé dans l'espace de commande (8).

2. Système formant soupape selon la revendication 1, dans lequel la membrane de fermeture (7) est disposée au niveau de l'élément de fermeture (4), de préférence au niveau d'une extrémité, opposée à l'orifice de distribution (5), de l'élément de fermeture (4).

3. Système formant soupape selon la revendication 1 ou 2, dans lequel le système de commande de pression comprend un élément de transfert (24) disposé entre la membrane de commande (6) et l'élément de fermeture (4) servant à transférer sur l'élément de fermeture (4) une pression agissant sur la membrane de commande (6).

4. Système formant soupape selon la revendication 2 et 3, dans lequel l'élément de transfert (24) est disposé entre la membrane de commande (6) et la membrane de fermeture (7).

5. Système formant soupape selon au moins l'une quelconque des revendications précédentes, dans lequel l'espace de commande (8) est fermé par rapport au dispositif de production de pression par un premier joint d'étanchéité, de préférence par une première membrane de roulement (11).

6. Système formant soupape selon au moins l'une quelconque des revendications précédentes, dans lequel le dispositif de production de soupape présente un accumulateur de force (9) et un élément de transfert de pression (10) pouvant être soumis à une action de l'accumulateur de force (9), dans lequel de préférence l'accumulateur de force (9) est réalisé sous la forme d'un ressort hélicoïdal.

7. Système formant soupape selon la revendication 6, dans lequel l'accumulateur de force (9) est réalisé au moins en deux parties, dans lequel de préférence l'accumulateur de force (9) comprend un premier accumulateur de force (91) et un deuxième accumulateur de force (92), qui sont branchés l'un derrière l'autre, dans lequel de préférence le premier accumulateur de force (91) et le deuxième accumulateur de force (92) prennent appui respectivement au niveau d'un flasque (16) d'un chariot (15) disposé de manière à pouvoir coulisser au niveau de l'élément de transfert de pression (10).

8. Système formant soupape selon au moins l'une quelconque des revendications précédentes, dans lequel le carter de soupape (1) est réalisé au moins en deux parties.

9. Système formant soupape selon la revendication 8, dans lequel le carter de soupape (1) comprend une première partie de carter de soupape (1a) et une deuxième partie de carter de soupape (1b), dans lequel la première partie de carter de soupape (1a) peut être reliée de manière amovible à la deuxième partie de carter de soupape (1b), dans lequel au moins la soupape de dosage (3), l'orifice de distribution (5), l'élément de fermeture (4), l'arrivée de liquide (2) et la membrane de fermeture (7) sont disposés de préférence dans la première partie de carter de soupape (1a).

10. Système formant soupape selon la revendication 9, dans lequel au moins la membrane de commande (6) et l'espace de commande (8) ainsi que de préférence également le dispositif de production de pression sont disposés dans la deuxième partie de carter de soupape (1b).

11. Système formant soupape selon la revendication 9, dans lequel le carter de soupape (1) comprend une troisième partie de carter de soupape (1c), dans laquelle le dispositif de production de pression et une première zone d'espace de commande (8a) sont disposés, dans lequel sont disposées dans la deuxième partie de carter de soupape (1b), la membrane de commande (6) et une troisième zone d'espace de commande (8c), qui est reliée par l'intermédiaire d'un conduit (23) formant une deuxième zone d'espace de commande (8b) à la première zone d'espace de commande (8a), dans lequel la première zone d'espace de commande (8a), la deuxième zone d'espace de commande (8b) et la troisième zone d'espace de commande (8c) forment conjointement l'espace de commande (8).

12. Système formant soupape selon l'une quelconque des revendications 1 à 11, dans lequel le dispositif de production de pression présente un élément de transfert de pression (10) pouvant être soumis à l'action d'un accumulateur de force (9), dans lequel un dispositif de décharge pouvant être commandé est prévu, par lequel la force exercée par l'accumulateur de force (9) sur l'élément de transfert de pression (10) peut être réduite.

13. Système formant soupape selon la revendication 12, dans lequel le dispositif de décharge comprend un espace de décharge (12), dans lequel de préférence un orifice de fluide (13) débouche dans l'espace de décharge (12), par l'intermédiaire duquel le fluide sous pression de préférence de l'air peut être introduit dans l'espace de décharge (12).

14. Système formant soupape selon la revendication 13, dans lequel l'élément de transfert de pression (10) présente un épaulement (14), qui délimite l'espace de décharge (12).

15. Système formant soupape selon la revendication 13 ou 14, dans lequel l'espace de décharge (12) est fermé par rapport à l'élément de transfert de pression (10) au moins en partie par un deuxième joint d'étanchéité, de préférence par une deuxième membrane de roulement (18).
